# EUROPEAN PATENT APPLICATION

(11) **EP 3 623 904 A1**
(43) Date of publication of application: **18.03.2020**
(21) Application number: 18211444.7
(22) Date of filing: 10.12.2018
(51) Int. Cl.: G06F 1/26, H02J 3/26, H02J 1/10

(54) **METHOD AND SYSTEM FOR CURRENT SHARING BALANCE IN THREE-PHASE INPUT SOURCE SYSTEM**

(30) Priority: 12.09.2018 US 201816129324
(71) Applicant: Quanta Computer Inc., Taoyuan City 333 (TW)
(72) Inventor: Ou Yang, Kuang-Hua, 333 Taoyuan City (TW); Lee, Wen-Kai, 333 Taoyuan City (TW)
(74) Representative: Michalski Hüttermann & Partner Patentanwälte mbB

(57) **Abstract**

A system (100) and method for current balancing from a three-phase AC power source (102a, 102b,102c) is disclosed. The system (100) includes power supply units (112,114,116), each having inputs coupled to one output of the three phase power source (106a, 106b, 106c), and a neutral conductor (104). Multiple loads (130,132,134) are each coupled to a DC output of one of the power supply units (112,114,116). Each of the loads include a component having adjustable power consumption. A controller (126) is coupled to each of the power supply units (112,114,116) and each of the loads (130,132,134). The controller (126) is operable to compare the power consumption of each of the loads to an average value. The controller adjusts the power consumption of at least one of the loads to balance the power consumption between the loads.

## Description

### TECHNICAL FIELD

The present disclosure relates generally to power systems in relation to a multi-load system. More particularly, aspects of this disclosure relate to load balancing to prevent imbalanced power outputs from a power system coupled to a phased current source.

### BACKGROUND

The emergence of the cloud for computing applications has increased the demand for off-site installations, known as data centers, that store data and run applications accessed by remotely connected computer device users. Such data centers typically have massive numbers of servers, switches, and storage devices to store and manage data. A typical data center has physical rack structures with attendant power and communication connections. There are many such network devices stacked in such rack structures found in a modern data center. For example, some data centers have tens of thousands of servers, attendant storage devices, and network switches. Thus, a typical data center may include tens of thousands, or even hundreds of thousands, of devices in hundreds or thousands of individual racks.

Such devices require a large amount of power. Electronic devices generally use a three-phase power system supplying AC power. In three-phase power supply systems, AC power is supplied via three conductors. Each conductor supplies an alternating voltage signal of the same frequency, relative to a common reference, with a phase difference of one third of a cycle between each. Thus, each conductor is said to provide a different phase. The common reference is usually connected to ground and often to a neutral current-carrying conductor. Due to the phase difference, the voltage on any conductor reaches its peak at one third of a cycle after one of the other conductors, and one third of a cycle before the remaining conductor. Each phase input in conjunction with the common neutral conductor may be used to power a separate load.

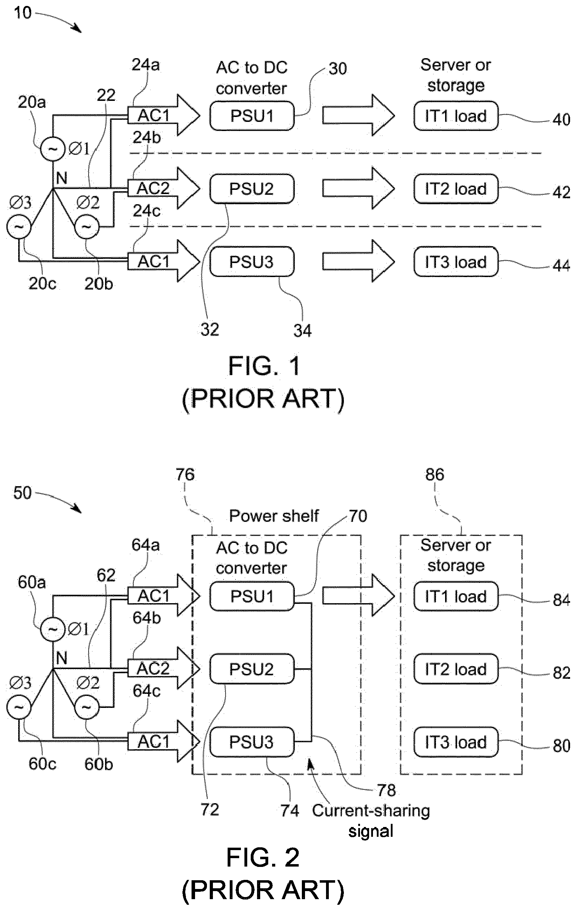

FIG. 1 illustrates a schematic block diagram of an exemplary prior art system 10 that is powered by three-phase power. The system 10 includes three AC phase input sources 20a, 20b, and 20c. Each of the AC phase input sources 20a, 20b, and 20c are at a different phase and are combined with a common neutral input 22 to provide corresponding AC inputs 24a, 24b, and 24c to one of three power supply units 30, 32, and 34. Each of the power supply units 30, 32, and 34 convert AC power to DC power. In this example, each of the power supply units 30, 32, and 34 then supply DC power to a corresponding load 40, 42, and 44. For example, each of the loads may be a server chassis.

In order to achieve good power quality in three-phase power system, balancing output loading is desirable. Load balancing makes input phase currents balance automatically, and there will be no current flowing into the neutral wiring. This prevents unnecessary power consumption in the input power system, and also can avoid losses voltage drop in phase voltage (line-to-neutral) to one or more of the loads. Therefore, the load for each of the phases should be as similar as possible. For example, in FIG. 1, a balance between the loads 40, 42, and 44 is desirable to provide good power quality.

However, in this case of systems similar to the system 10 in FIG. 1, where power supply units are separated to supply power to different loads such as servers and storage devices, load balancing becomes a problem. For example, if power supply units are separated in order to supply power to different data center devices that are installed in different power shelves, it is difficult to control load balancing through the power supply units themselves. Thus, as often happens when different loads are on the three different power supplies each connected to a different phase AC input, input phase current for the various phases will appear unbalanced.

In the existing technology, output current sharing can be used to provide load balancing. Output current sharing is implemented easily via a drop method or an active current-sharing method. FIG. 2 shows a prior art system 50 that allows current sharing to automatically balance input phase current. The system 50 includes AC phase input sources 60a, 60b, and 60c. Each of the AC sources 60a, 60b, and 60c are at a different phase and are each combined with a common neutral input 62 to provide AC inputs 64a, 64b, and 64c. each of the AC inputs 64a, 64b, and 64c supplies an AC power signal to one of three power supply units 70, 72, and 74. Each of the power supply units 70, 72, and 74 are installed on a power shelf 76. The power shelf 76 outputs a current sharing signal 78. In this example, each of the power supply units 70, 72, and 74 supply DC power to a corresponding load 80, 82, and 84. For example, the loads 80, 82, and 84 may be servers on a server chassis 86.

If the power supply units 70, 72, and 74 are installed on the same power shelf 76, this arrangement allows current-sharing signals (e.g., by a shared bus) to be connected together. This configuration allows input phase-current to be balanced automatically. In most application, load sharing control adopts an automatic master-slave current sharing control via current sharing controllers on each power supply. Thus, the supply that delivers the highest current (as sensed by an internal resistor) acts as the master and drives a common reference (e.g., a shared bus) to a voltage proportional to its output current. The feedback voltage of the other parallel power supplies (slaves) is then trimmed by an "adjustment" network so that they can support their amount of load current. The slave power units supply work as current-controlled current sources. Although adding a current-sharing circuit is feasible to provide load balancing, it makes power systems more complicated, resulting in increased costs.

Therefore, there is a need for a simplified system to provide balanced current sharing without the need for current sharing circuitry. There is a further need for a system that allows power supply units to provide current sharing without requiring the power supply units be installed on a common power shelf.

### SUMMARY

One disclosed example is a system for current balancing from a three-phase AC power source. The system includes power supply units, each having inputs coupled to one output of the three phase power source, and a neutral conductor. Multiple loads are each coupled to a DC output of one of the power supply units. Each of the loads includes a component having adjustable power consumption. A controller is coupled to each of the power supply units and each of the loads. The controller is operable to compare the power consumption of each of the loads to an average value. The controller adjusts the power consumption of at least one of the loads to balance the power consumption between the loads.

Another example is a method for insuring current balancing from a three-phase AC power source. An input of each of a plurality of power supply units is coupled to one output of a three-phase AC power source and a neutral conductor. A DC output of each of the plurality of power supply units is coupled to a plurality of loads. Power consumption of each of the plurality of loads is determined. Each of the loads includes a component having adjustable power consumption. The power consumption of each of the loads is compared to a predetermined value via a controller, coupled to each of the plurality of power supply units and each of the plurality of loads. The power consumption of at least one of the components of one the loads is adjusted to balance the power consumption between the loads.

The above summary is not intended to represent each embodiment or every aspect of the present disclosure. Rather, the foregoing summary merely provides an example of some of the novel aspects and features set forth herein. The above features and advantages, and other features and advantages of the present disclosure, will be readily apparent from the following detailed description of representative embodiments and modes for carrying out the present invention, when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIG. 1 is a prior art system with separated power supplies causing the potential for unbalanced loads;
FIG. 2 is a block diagram of a prior art system with power supplies on a common power shelf that includes a circuit that balances the loads;
FIG. 3A is block diagram of an example system that allows current balancing without a specialized circuit;
FIG. 3B is a block diagram of one of the loads in the system in FIG. 3A; and
FIG. 4 is a flow diagram the routine to insure proper current balancing between loads.

The present disclosure is susceptible to various modifications and alternative forms. Some representative embodiments have been shown by way of example in the drawings and will be described in detail herein. It should be understood, however, that the invention is not intended to be limited to the particular forms disclosed. Rather, the disclosure is to cover all modifications, equivalents, and alternatives falling within the spirit and scope of the invention as defined by the appended claims.

### DETAILED DESCRIPTION OF THE ILLUSTRATED EMBODIMENTS

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

The below described method and system senses current from a three phase AC source to different loads. If an imbalance of current is detected, a controller, such as a rack management controller, adjusts the power consumption of one or more of the loads, to adjust the current to a predetermined level such as a desired average current from the three phases of the AC current source.

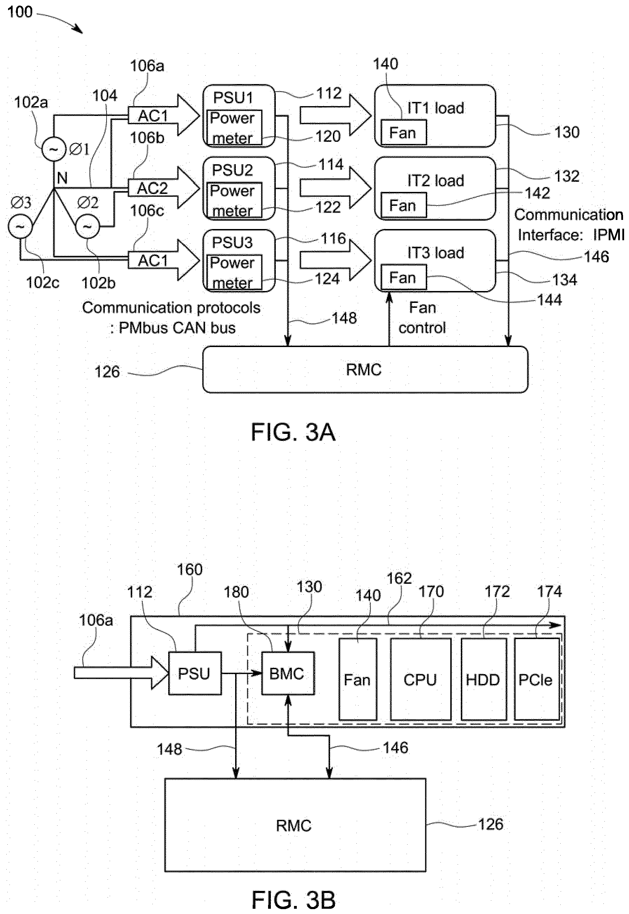

FIG. 3A shows an example system 100 that allows load balancing without a current balancing circuit. The system 100 includes three AC phase input sources 102a, 102b, and 102c. Each of the AC phase input sources 102a, 102b, and 102c are at a different phase, and are combined with a common neutral input 104 to provide corresponding AC inputs 106a, 106b, and 106c to one of three power supply units 112, 114, and 116. Each of the power supply units 112, 114, and 116 convert AC power from one of the AC phase input sources 102a, 102b, and 102c to DC power. The power supply units 112, 114, and 116, each have corresponding power meters 120, 122, and 124. The outputs of the power meters 120, 122, and 124 are coupled to a controller, which in this example is a rack management controller 126.

In this example, each of the power supply units 112, 114, and 116 supply DC power to a corresponding power consuming load such as server loads 130, 132, and 134. The server loads 130, 132, and 134 all have corresponding cooling mechanisms such as a fan wall or corresponding fans 140, 142, and 144, for cooling electronic components in the respective server. The rack management controller 126 may control the speed of the fans 140, 142, and 144. A communication bus 146 allows internal controllers on the server loads 130, 132, and 134, to communicate operational data of the server to the rack management controller 126. In this example, the communication bus 146 is an IPMI communication bus. The rack management controller 126 may be connected to a power management bus 148 to receive data from the power meters 120, 122, and 124.

Depending on the components in the server loads 130, 132, and 134, as well as the operation of the system 100, the server loads 130, 132, and 134 may consume different power levels. As such there may be load imbalance between the loads. For example, if the server loads 130, 132, and 134 have components that require different levels of power, there may be a load imbalance. Further, if one of the server loads is operating at a higher level, it may require more power. The corresponding fan may also consume more power to cool the active server load.

FIG. 3B is a block diagram of certain load components 130 in the system 100 shown in FIG. 3A. The system 100 (from FIG. 3A) may be a rack having different servers such as a server 160 shown in FIG. 3B that includes the power supply unit 112, the fan 140, and the server load 130. The power supply unit 112 receives the phased AC current input 106a that is coupled to current at one phase and the neural conductor line 104 in FIG. 3A. The power supply unit 112 converts the received AC power from the AC current input 106a to a DC output rail 162 that provides power to components of the server load 130. In this example, the server load 130 includes a CPU 170, a storage device 172 such as a hard disk drive (HDD) or solid state drive (SSD), and a card device 174. The server 160 includes a baseboard management controller 180 that monitors operational data from the server 160, including power consumption from sensing voltage levels of the DC output rail 162. For simplicity of illustration, only one CPU, one storage device, and one card device is shown. Servers may include multiple different types of each device, or multiple devices, such as 2 or 4 CPUs, multiple storage devices, and multiple card devices, depending on the type of server. Each server represented by the server loads 130, 132, and 134 in FIG. 3A may also each have different numbers of each device from each other.

In this example, the baseboard management controller 180 is connected via the communication bus 146 (from FIG. 3A) to the rack management controller 126. Thus, the rack management controller 126 may receive operational data for the server 160 from the baseboard management controller 180 via the bus 146, as well as operational data from the power supply unit 112 via the power management bus 148. As will be explained below, the rack management controller may then send commands via the bus 146 to the baseboard management controller 180 to regulate power consumption of the server load 130.

To decrease the effects of unbalanced loads, several actions can be taken by the system 100. The first and most basic solution is to rearrange or redistribute the loads in such a way that the system 100 becomes more balanced.

In the components of the system 100 shown in FIGs. 3A-3B, a controlled method of current sharing involves using the rack management controller 126 to monitor the supply current by reading the output of the internal power meters 120, 122, and 124 in each power supply unit 112, 114, and 116. The rack management controller 126 compares the outputs of the power meters 120, 122, and 124 to an average current required from each power supply in real time.

In this example, the rack management controller 126 may adjust the loading on each of the power supply units 112, 114, and 116, by increasing or decreasing the fan speed of one or more of the respective fans 140, 142, and 144 until the supply current for the respective power supply units 112, 114, and 116 matches the required value. The speed of the fans 140, 142, and 144, is proportional to the current required by the respective server loads 130, 132, and 134. In this manner, input current will be balanced in the three-phase system 100 once loading is balanced between the servers 130, 132, and 134.

The PSU 112 shown in FIG. 3B may communicate with the RMC 126 via a power management communication bus 148. The power management communication bus 148 may be PMbus, a bus serial peripheral interface (SPI) bus, an inter-integrated circuit (I2C) bus, a controller area network (CAN) bus, or a bus that supports an Electronic Industries Alliance (EIA), RS-232, RS-422, or RS-485 standard. In this example, the meters 120, 122, and 124 of respective power supply units 112, 114, and 116 in FIG. 3A update their status including input voltage, input current, and input power to the rack management controller 126 via the power management bus 148. Each power supply unit, such as the power supply unit 112, may also update status to the respective BMC, such as the BMC 180 in FIG. 3B, via the power management bus 148. In this manner, the rack management controller 126 can adjust power consumption for each individual server load by sending commands to the appropriate BMC via the IPMI management bus. For example, the rack management controller may reduce the load of the server load 130 by sending a command to the BMC 180 to reduce the fan speed of the fan 140.

In this example, the rack management controller 126 adjusts the current requirements by adjusting fan speed such that the three power supply units 112, 114, and 116 share the load so that input current sharing between the loads meets the requirements in the plus or minus 10% reasonable tolerance. When new loads are added, the system may have a momentary unbalance, but this situation does not serious system operation. Input current of a three-phase source system would achieve balance. The fan speed of each server and CPU switching frequency of each server may be increased or decreased via BMC or RMC commands to achieve a current balance of the system output load. The control method for a PCU is similar to fan speed control. When system loading imbalance occurs, the CPU is operated at a throttling mode, which runs the CPU at a lower speed, keeps it cooler, and uses less power. This occurs because power use in a CPU is linear with clock frequency.

For example, if the power consumption of the server load 130 is sensed as 65 W, and the power consumption of the server loads 132 and 134 is sensed as 50 W, the rack management controller 126 will determine an imbalance situation. In this example, the rack management controller 126 may reduce the fan speed of the fan 140 so the power consumption of the server load is reduced to 55W, which is within 10% of the desired average power consumption level of 50W. In another example, if the power consumption of the server loads 130 and 132 is sensed as 60 W, and the power consumption of the server load 134 is sensed as 50 W, the rack management controller 126 will determine an imbalance situation. In this example, the rack management controller 126 may reduce the fan speed of the fans 140 and 142 so the power consumption of the server loads 130 and 132 is reduced to 55W, which is within 10% of the desired average power consumption level of 50W.

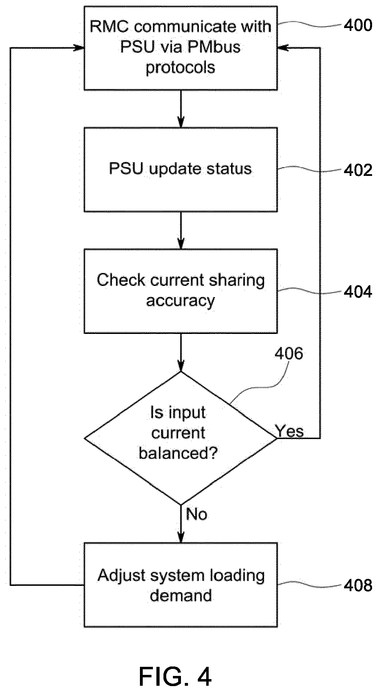

A flow diagram in FIG. 4 is representative of example machine readable instructions for current load balancing in the system 100 in FIGs. 3A-3B. In this example, the machine readable instructions comprise an algorithm for execution by: (a) a processor; (b) a controller; and/or (c) one or more other suitable processing device(s). The algorithm may be embodied in software stored on tangible media such as flash memory, CD-ROM, floppy disk, hard drive, digital video (versatile) disk (DVD), or other memory devices. However, persons of ordinary skill in the art will readily appreciate that the entire algorithm and/or parts thereof can alternatively be executed by a device other than a processor and/or embodied in firmware or dedicated hardware in a well-known manner (e.g., it may be implemented by an application specific integrated circuit [ASIC], a programmable logic device [PLD], a field programmable logic device [FPLD], a field programmable gate array [FPGA], discrete logic, etc.). For example, any or all of the components of the interfaces can be implemented by software, hardware, and/or firmware. Also, some or all of the machine readable instructions represented by the flowcharts may be implemented manually. Further, although the example algorithm is described with reference to the flowchart illustrated in FIG. 4, persons of ordinary skill in the art will readily appreciate that many other methods of implementing the example machine readable instructions may alternatively be used. For example, the order of execution of the blocks may be changed, and/or some of the blocks described may be changed, eliminated, or combined.

As shown in FIG. 4, the RMC 126 communicates with the power supply units via the power management bus 148 (400). Each of the power supply units then update their current power output status to the rack management controller 126 (402). The rack management controller 126 then checks current sharing accuracy based on whether the currents from the phased inputs are within an acceptable variance of each other (404). In this example, the current for each phased input are within an acceptable variance if they are within 10% of the average current. If the input currents are sufficiently balanced, the routine loops back to communicating with the BMCs (400). If the input currents are not balanced, the rack management controller 126 controls the fans to increase or decrease power consumption at a level that will balance the currents of the power supplies within the acceptable tolerance (406). The routine then loops back to communicating with the BMCs (400).

As used in this application, the terms "component," "module," "system," or the like, generally refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller, as well as the controller, can be a component. One or more components may reside within a process and/or thread of execution, and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

The terminology used herein is for the purpose of describing particular embodiments only, and is not intended to be limiting of the invention. As used herein, the singular forms "a," "an," and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

While various embodiments of the present invention have been described above, it should be understood that they have been presented by way of example only, and not limitation. Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A system for current balancing from a three-phase AC power source, the system comprising:
a plurality of power supply units, each having inputs coupled to one output of the three phase power source, and a neutral conductor;
a plurality of loads, each coupled to a DC output of one of the power supply units, the loads including a component having adjustable power consumption;
a controller coupled to each of the plurality of power supply units and each of the plurality of loads, the controller operable to compare the power consumption of each of the loads to a predetermined value, and adjust the power consumption of at least one of the loads to balance the power consumption between the loads.

2. The system of claim 1, wherein the component is a fan, and wherein the fan speed may be adjusted.

3. The system of claim 1, wherein the component is a CPU, and wherein the operating frequency of the CPU may be adjusted.

4. The system of any of claims 1 to 3, wherein each of the power supply units include a power meter.

5. The system of any of claims 1 to 4, wherein the controller is a rack management controller, and each of the power supply units and loads are mounted on a corresponding server.

6. The system of claim 5, wherein the corresponding server includes a baseboard management controller operable to monitor power consumption by the server.

7. The system of claim 6, further comprising a power management bus coupled to the baseboard management controller and the rack management controller.

8. The system of any of claims 1 to 7, wherein the predetermined value is an average current from the three-phase AC power source.

9. A method for insuring current balancing from a three-phase AC power source, the method comprising:
coupling an input of each of a plurality of power supply units, to one output of a three-phase AC power source and a neutral conductor;
coupling a DC output of each of the plurality of power supply units to a plurality of loads;
determining power consumption of each of the plurality of loads, each of the loads including a component having adjustable power consumption;
comparing the power consumption of each of the loads to a predetermined value, via a controller coupled to each of the plurality of power supply units and each of the plurality of loads; and
adjusting the power consumption of at least one of the components of one the loads to balance the power consumption between the loads.

10. The method of claim 9, wherein the component is a fan, and wherein adjusting the power consumption includes adjusting a fan speed of the fan, or wherein the component is a CPU, and wherein the adjusting the power consumption includes adjusting the operating frequency of the CPU.

11. The method of claim 9 or 10, wherein each of the power supply units include a power meter.

12. The method of any of claims 9 to 11, wherein the controller is a rack management controller, and each of the power supply units and loads are mounted on a corresponding server.

13. The method of claim 12, wherein the corresponding server includes a baseboard management controller operable to monitor power consumption by the server.

14. The method of claim 13, wherein the adjusting the power consumption includes the controller sending a signal via a power management bus coupled to the baseboard management controller.

15. The method of any of claims 9 to 14, wherein the predetermined value is an average current from the three-phase AC power source.
